# EUROPÄISCHE PATENTSCHRIFT

(11) **EP 3 622 194 B1**
(45) Veröffentlichungstag und Bekanntmachung des Hinweises auf die Patenterteilung: **20.01.2021**
(21) Anmeldenummer: 18718408.0
(22) Anmeldetag: 09.04.2018
(51) Int. Cl.: F16D 65/18

(54) **ELEKTROMECHANISCHER BREMSENAKTUATOR**
ELECTRO MECHANIC BRAKE ACTUATOR
VÉRIN ÉLECTROMÉCANIQUE POUR FREIN

(30) Priorität: 09.05.2017 DE 102017004436
(43) Veröffentlichungstag der Anmeldung: 18.03.2020
(73) Patentinhaber: WABCO Europe BVBA, 1170 Brussels (BE)
(72) Erfinder: HENNING, Paul, 68723 Schwetzingen (DE); KLOOS, Eugen, 68519 Viernheim (DE)
(74) Vertreter: Copi, Joachim
(86) Internationale Anmeldenummer: PCT/EP2018/058975
(87) Internationale Veröffentlichungsnummer: WO 2018/206204

(56) Entgegenhaltungen:
- WO-A1-2014/139919
- CH-A- 385 981
- DE-A1- 19 851 668
- DE-A1-102005 049 760
- FR-A1- 2 496 804
- US-A1- 2011 155 520

## Beschreibung

Die Erfindung betrifft einen elektromechanischen Bremsenaktuator für eine Bremse, insbesondere eine Nutzfahrzeug-Scheibenbremse, mit einem Elektromotor zum Erzeugen eines Antriebs-Drehmomentes, einer mit dem Elektromotor wirkverbundenen, rotatorisch beweglich gelagerten Kurvenscheibe, und einem entlang einer Stößelachse beweglichen Bremsstößel zur Betätigung eines Bremshebels der Bremse.

Elektromechanische Bremsenaktuatoren sind in der Kraftfahrzeug-, insbesondere Nutzkraftfahrzeugbranche allgemein bekannt. So offenbart beispielsweise AT 516801 A2 einen solchen elektromechanischen Bremsenaktuator. Ziel ist allgemein, eine Bremse mittels elektrischer Energie zu betreiben. Eine Herausforderung besteht darin, ausreichend geringe Bremsbetätigungszeiten zu realisieren und gleichzeitig mittels eines möglichst kleinen und sparsamen Elektromotors eine gewünschte Bremsleistung zu erzielen. AT 516801 A2 schlägt hierzu einen elektromechanischen Aktuator vor, der zwei Übertragungsglieder aufweist. An dem ersten Übertragungsglied ist ein Koppelglied vorgesehen, an dem ein Abtastelement angeordnet ist.

Das zweite Übertragungsglied weist eine Erhebungskurve auf. Das Abtastelement tastet die Erhebungskurve ab, wobei das zweite Übertragungsglied das Eingangsmoment für das erste Übertragungsglied aufbringt und die Eingangsmomente des ersten Übertragungsgliedes über den Verdrehwinkel für unterschiedliche Verschleißzustände des Bremsbelages eine Nullkurve ergeben.

Allerdings haben Systeme wie das Vorgenannte den Nachteil, dass der konstruktive Aufbau eine hohe Komplexität aufweist, die zum einen bezüglich Fertigung und Montage kostenintensiv ist, und zum anderen einer einfachen Wartbarkeit entgegensteht. Auch ergibt sich aufgrund der Vielzahl der Bauteile ein signifikanter Raumbedarf der Anordnung

Die CH 385 981 A zeigt einen Elektromechanischen Bremsenaktuator mit einem Schneckengetriebe, dass eine Trommelbremse über einen Elektromotor betätigt. Die als Bremsstößel ausgebildete Zugstange kämmt achsparallel über eine Schnecke des Schneckengetriebes ein Zahnsegment des Schneckengetriebes. Die FR 2 496 804 Al offenbart eine als Elektromechanischen Bremsenaktuator ausgebildete Zuspanneinrichtung für Reibungsbremsen, die ein Untersetzungsgetriebe und ein dem Untersetzungsgetriebe nachgeordnetes Umsetzgetriebe aufweist. Die Zuspanneinrichtung weist einen Hohlstößel mit einem Auge auf. An dem Auge ist ein Bremshebel angeordnet. An der dem Auge gegenüberliegenden Seite des Bremshebels ist ein Bremsklotz angeordnet, der eine Bremsscheibe während eines Zuspannvorgangs abbremst.

Vor diesem Hintergrund lag der vorliegenden Erfindung die Aufgabe zugrunde, einen elektromechanischen Bremsenaktuator anzugeben, der die vorstehend beschriebenen Nachteile möglichst weitgehend überwindet. Insbesondere lag die Aufgabe zugrunde, einen elektromechanischen Bremsenaktuator anzugeben, der mit möglichst minimalem apparativem Aufwand hohe Bremsleistungen bei gleichzeitig geringer Bauteilkomplexität und möglichst geringer erforderlicher Antriebsleistung ermöglicht.

Die Erfindung löst die ihr zugrunde liegende Aufgabe bei einem elektromechanischen Bremsenaktuator nach Anspruch 1, indem die Kurvenscheibe und der Bremsstößel miteinander in Anlage stehende Kontaktflächen aufweisen, welche zur direkten Übertragung des Antriebs-Drehmoments zwischen Kurvenscheibe und Bremsstößel aneinander abgleiten oder abrollen.

Die Erfindung betrifft in erster Linie Scheibenbremsen, wobei bei einer Scheibenbremse der zum Bremsbelag korrespondierende Gegenpart die Bremsscheibe ist. Prinzipiell ist die Erfindung jedoch auch in Zusammenhang mit Trommelbremsen einsetzbar.

Die Erfindung macht sich die Erkenntnis zunutze, dass eine Kurvenscheibe dazu eingesetzt werden kann, in Verbindung mit einem auf einer Kontaktfläche in Anlage stehendem Bremsstößel einer Rotationsbewegung der Kurvenscheibe direkt in eine nicht-lineare Bewegung des Bremsstößels umzuwandeln. Hierdurch ergibt sich der Vorteil, dass durch ein solches unmittelbares Inanlagestehen eine verlustarme Kraftübertragung erfolgt, die gleichzeitig mit insgesamt wenigen Bauteilen auskommt. Ferner lässt sich durch einen solchen Aufbau der Bauraum insgesamt gering halten und gleichzeitig eine hohe Betriebssicherheit erzielen.

Die Kontaktfläche der Kurvenscheibe ist vorzugsweise derart ausgebildet, dass in Abhängigkeit von der Winkelstellung zwischen Kurvenscheibe und Bremsstößelachse eine nichtlineare Kraftübertragung von der Kurvenscheibe auf den Bremsstößel erfolgt. Diese nichtlineare Übertragung ist vorzugsweise so gestaltet, dass beispielsweise zur Überwindung des Luftspaltes zwischen Bremsbacke und Bremsscheibe zunächst große Vorschubstrecken bei geringerer Bremskraftübertragung realisiert werden können, wohingegen in einem Bereich, der ein Aufbringen großer Bremskräfte erfordert, eine größere Bremskraft bei geringerem Vorschub des Bremsstößels erzielt werden kann.

Bevorzugt ist der Umfang der Kurvenscheibe nicht-zylindrisch ausgebildet. Alternativ oder zusätzlich ist die Kurvenscheibe darüber hinaus vorzugsweise exzentrisch auf einer Welle angeordnet.

Eine solche Anordnung beziehungsweise Ausbildung der Kurvenscheibe ermöglicht es, eine nichtlineare Kraftübertragung von der Kurvenscheibe auf den Bremsstößel bei minimaler Teileanzahl der Baugruppe zu realisieren. Insbesondere kann durch eine Anpassung dieser Parameter eine gezielte Einstellung von Bremskraft und Vorschubstrecke für einen bestimmten Drehwinkelbereich der Kurvenscheibe erfolgen.

Die Erfindung wird vorteilhaft dadurch weitergebildet, dass der Bremsstößel zwischen einer zurückgezogenen Position und einer ausgelenkten Position hin und her bewegbar ist, und die Kurvenscheibe zwischen einer Ausgangsposition und einer Endposition hin und her bewegbar ist, wobei die Ausgangsposition der Kurvenscheibe mit der zurückgezogenen Position des Bremsstößels korrespondiert und die Endposition der Kurvenscheibe mit der ausgelenkten Position des Bremsstößels korrespondiert.

Dadurch wird ermöglicht, den Bremsstößel über seinen gesamten Bewegungsbereich mittels der Kurvenscheibe, insbesondere unter Optimierung der Parameter Bremskraft und Vorschubstrecke, zu betreiben.

Weiterhin wird bevorzugt, dass die Kontaktfläche des Bremsstößels und der Kurvenscheibe in einem Kontaktpunkt aneinander anliegen, und in dem Kontaktpunkt einen Kontaktwinkel relativ zu der Stößelachse definieren, und bei zunehmender Rotation der Kurvenscheibe aus der Ausgangsposition der Kontaktwinkel kleiner wird. Dieses bringt den Effekt mit sich, dass eine Drehwinkeländerung der Kurvenscheibe in einem Bereich kleiner Auslenkungen des Bremsstößels zur Überwindung einer größeren Strecke auf Seiten des Bremsstößels bei kleinerer übertragener Bremskraft führt, und wobei im Bereich der Maximalauslenkung des Bremsstößels eine äquivalente Drehwinkeländerung eine kleinere Auslenkung des Bremsstößels bei höherer übertragener Kraft zur Folge hat.

In einer weiteren bevorzugten Ausführungsform weist der elektromechanische Bremsenaktuator ein Getriebe auf, welches von dem Elektromotor angetrieben wird und welches mit der Kurvenscheibe wirkverbunden ist.

Ein zwischen Elektromotor und Kurvenscheibe zwischengeschaltetes Getriebe ermöglicht es, den Elektromotor in einem effizienteren Betriebsbereich betreiben zu können. Insgesamt wird damit ermöglich leistungsmäßig vergleichsweise kleinere Elektromotoren zu verwenden.

Ferner weist das Getriebe gemäß einer bevorzugten Ausführungsform ein Umlaufrädergetriebe auf, vorzugsweise ein Planetengetriebe.

Ein solches Getriebe stellt bei geringen Leistungsverlusten auf kleinem Bauraum eine hohe Drehzahlreduktion und Drehmomenterhöhung bereit.

Gemäß einer bevorzugten Weiterbildung weist das Getriebe zusätzlich eine weitere Getriebestufe auf, vorzugsweise ausgebildet als Stirnradgetriebe, welches dem Elektromotor oder dem Umlaufrädergetriebe vorgeschaltet oder nachgeschaltet ist. Erforderlichenfalls lässt sich mit einem solchen Getriebe, welches alternativ auch als Planetengetriebe oder Wellgetriebe (auch bezeichnet als Spannungswellen- oder Gleitkeilgetriebe) ausgebildet sein kann, eine weitere Drehzahlreduktion bei einer korrespondierenden Momenterhöhung bei nach wie vor kompaktem Bauraum realisieren.

Eine weitere bevorzugte Ausführungsform zeichnet sich dadurch aus, dass die Kurvenscheibe eine Einbuchtung zur Definition einer Parkbremsposition in ihrem Umfang aufweist, wobei die Einbuchtung zwischen einem Kontaktpunkt mit dem Bremsstößel in der Ausgangsposition und einem Kontaktpunkt mit dem Bremsstößel in der Endposition angeordnet ist. Befindet sich die Kurvenscheibe mit ihrer Einbuchtung in einer solchen Kontaktposition, bleibt die in dieser Position bereitgestellte Bremsleistung, die über den Bremsstößel eingebracht wird, konstant, auch wenn der antreibende Elektromotor nicht länger mit elektrischer Energie versorgt wird. Durch eine zielführende Positionierung der Einbuchtung lässt sich die Parkbremsleistung modulieren. Diese Funktionalität geht mit einer geringen baulichen Komplexität einher, ist darüber hinaus wartungsfreundlich und mechanisch zuverlässig.

Vorzugsweise ist die Einbuchtung derart angeordnet, dass der Bremsstößel, wenn er in der Einbuchtung angeordnet ist, eine Bremsleistung in einem Bereich von etwa 80% bis etwa 100% der Gesamtbremsleistung überträgt. Durch eine derartige Funktionsintegration lässt sich eine Parkbremsfunktionalität mit einer geringen Bauteilanzahl realisieren. Ferner wirkt sich dieses positiv auf den erforderlichen Bauraum der Vorrichtung aus.

Eine weitere bevorzugte Ausführungsform zeichnet sich durch ein Federelement aus, welches derart mit dem Elektromotor wirkverbunden ist, dass in einem ersten Auslenkungsstreckenbereich des Bremsstößels Energie gespeichert wird und in einem zweiten Auslenkungsstreckenbereich des Bremsstößels Energie an den Bremsstößel abgegeben wird. Hierdurch ergibt sich der Vorteil, dass in einem ersten Auslenkungsstreckenbereich des Bremsstößels, bei dem dieser im Wesentlichen den Luftspalt zwischen Bremsscheibe und Bremsbacke zu überwinden hat und lediglich eine geringe Vorschubkraft erforderlich ist, Energie in dem Federelement gespeichert werden kann, die dann in einem zweiten Auslenkungsstreckenbereich, bei dem eine hohe Bremskraftübertragung auf den Bremsstößel erforderlich ist, unterstützend zur Antriebsleistung des Elektromotors auf den Bremsstößel aufgebracht werden kann. Hierdurch ergibt sich insgesamt der Vorteil, dass eine höhere Bremsleistung mit einem leistungsschwachen Elektromotor erzielt werden kann. Außerdem ermöglicht ein solches Bauprinzip, das Federelement beliebig und unter optimaler Ausnutzung des vorhandenen Bauraums in 360° um die Achse der Kurvenscheibe herum anordnen zu können.

In einer weiteren bevorzugten Ausführungsform weist das Federelement eine Interaktionsfläche auf, die mit einer Umfangsfläche eines von dem Elektromotor angetriebenen Nockens in Anlage steht, wobei die Interaktionsfläche des Federelements und die Umfangsfläche des Nockens aneinander abgleiten oder abrollen, und die Umfangsfläche des Nockens derart geformt ist, dass in einem ersten Drehwinkelbereich des Nockens Energie in dem Federelement gespeichert wird und in einem zweiten Drehwinkelbereich Energie von dem Federelement abgegeben wird.

Durch eine solche Anordnung ergibt sich der Vorteil, dass der Nocken sowohl dazu geeignet ist, das Federelement vorzuspannen und somit Energie zu speichern als auch von dem Federelement in Bewegungsrichtung gedrückt zu werden, womit Energie über eine Welle schließlich an den Elektromotor und darüber hinaus auch an die Kurvenscheibe abgegeben wird. Somit liegt der Gesamtvorteil erneut in einer Umsetzung mit minimierter Bauteilkomplexität, die wartungsfreundlich ist und eine hohe Zuverlässigkeit aufweist.

Vorzugsweise weist der Nocken einen dritten Drehwinkelbereich auf, in welchem der Abstand der Achse der Drehwelle zum Nockenumfang im Wesentlichen konstant ist. Dieses bringt den Vorteil mit sich, dass der Nocken unmittelbar zur Definition einer Parkbremsposition verwendet werden kann, in der das Federelement komprimiert ist und derart an den Nocken angreift, dass dieser auch ohne Anliegen von Antriebsleistung in der betreffenden Stelle verharrt. Auch kann die Parkbremsposition hierdurch so definiert werden, dass eine Bremsleistung von etwa 50% bis etwa 80% der Gesamtbremsleistung übertragen wird. Eine solche Bremsleistung ist im Hinblick auf die Sicherstellung einer ausreichenden Parkbremskraft ausreichend und bleibt gleichzeitig deutlich unterhalb der maximalen Bremskraftübertragung. Hierdurch wird es möglich, Bauteile im Hinblick auf geringere dauerhaft anliegende Lasten zu dimensionieren, wodurch sich insgesamt Materialkosten, Gewicht, und Bauraum vorteilhaft beeinflussen lassen.

Vorzugsweise hemmt die Federkraft des Federelements in dem dritten Drehwinkelbereich des Nockens eine Rotation der Nocke derart, dass bei Wegfall des Antriebsdrehmoments des Elektromotors der Bremsstößel in der korrespondierenden Auslenkung gehalten wird. Hinsichtlich der Vorteile sei auch auf die obigen Ausführungen verwiesen.

Gemäß einer weiteren alternativ bevorzugten Ausführungsform weist das Federelement einen Interaktionskopf auf, der mit einer an der Kurvenscheibe in Axialrichtung aufgebrachten Bahn in Anlage steht, die derart kontuiert ist, insbesondere eine entlang ihrer Länge vagierende Bahntiefen aufweist, dass in einem ersten Drehwinkelbereich der Kurvenscheibe Energie in dem Federelement gespeichert wird, und in einem zweiten Drehwinkelbereich Energie von dem Federelement abgegeben wird. Eine solche alternative Ausführungsform bringt den Vorteil mit sich, dass eine Reduktion der Teileanzahl des elektromechanischen Bremsenaktuators realisiert werden kann. Die Kurvenscheibe interagiert mittels der auf sie aufgebrachten Bahn direkt mit dem Federelement. Ferner ermöglicht ein solches Bauprinzip, das Federelement beliebig und unter optimaler Ausnutzung des vorhandenen Bauraums auf beliebiger Seite der Kurvenscheibe anordnen zu können.

Gemäß einer weiteren Ausführungsform steht das Federelement mit einer an der Kurvenscheibe angeordneten Kurbel in Anlage, die so ausgebildet ist, dass in einem ersten Drehwinkelbereich der Kurvenscheibe Energie in dem Federelement gespeichert wird, und in einem zweiten Drehwinkelbereich Energie von dem Federelement abgegeben wird. Das Bauprinzip ermöglicht es ebenfalls, das Federelement flexibel unter optimaler Ausnutzung des vorhandenen Bauraums anordnen zu können.

Vorzugsweise ist der Bremsstößel zur Betätigung des Bremshebels linear geführt entlang der Stößelachse beweglich. Die Bewegung des Bremsstößels ist vorzugsweise rein translatorisch geführt, bezogen auf dessen Längsachse.

In einer alternativen bevorzugten Ausführungsform ist der Bremsstößel zur Betätigung des Bremshebels nichtlinear geführt beweglich. Eine solche Ausgestaltung ermöglicht es, die Kraftübertragung von der Kurvenscheibe auf den Bremsstößel nicht nur mittels der Form der Kurvenscheibe zu beeinflussen, sondern auch mittels der Bewegungsfreiheitsgrade des Bremsstößels entlang seiner Bewegung selbst, was eine Optimierung der Kraftübertragungsfunktion unterstützt.

Die Erfindung ist vorstehend unter Bezugnahme auf einen elektromechanischen Bremsenaktuator beschrieben worden. In einem weiteren Aspekt betrifft die vorliegende Erfindung ferner eine Scheibenbremse, insbesondere eine Nutzfahrzeugscheibenbremse, mit einer Bremsscheibe, mindestens einem Bremsbelag zum Erzeugen einer Bremswirkung mittels Andrücken an die Bremsscheibe, einen um eine Hebelachse schwenkbar gelagerten Bremshebel zum Andrücken des mindestens einen Bremsbelags an die Bremsscheibe und einem in Richtung einer Stößelachse beweglichen Bremsstößel, der mit dem Bremshebel gekoppelt ist, um die Schwenkbewegung des Bremshebels um die Hebelachse zu bewirken, und einem elektromechanischen Bremsaktuator, der mit dem Bremsstößel gekoppelt ist, um dessen Bewegung in Richtung der vorstehend beschriebenen Stößelachse zu bewirken.

Die Erfindung löst die eingangs bezeichnete Aufgabe in Bezug auf die Scheibenbremse, indem der elektromechanische Bremsaktuator nach einer der vorhergehenden Ausführungsformen ausgebildet ist. Eine solche Scheibenbremse vereint die bereits genannten Vorteile in sich und dient insbesondere dazu, eine hochwirksame Bremse mit hoher Zuverlässigkeit, hoher Wartungsfreundlichkeit und einer geringen Leistungsaufnahme bei einem möglichst geringen erforderlichen Bauraum bereitzustellen.

Ausführungsbeispiele der Erfindung werden nun nachfolgend anhand der Zeichnungen beschrieben. Diese sollen die Ausführungsbeispiele nicht notwendigerweise maßstäblich darstellen, vielmehr sind die Zeichnungen, wo zur Erläuterung dienlich, in schematisierter und/oder leicht verzerrter Form ausgeführt. Im Hinblick auf Ergänzungen der aus den Zeichnungen unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in den Zeichnungen sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, den Zeichnung und/oder den Ansprüchen offenbarten Merkmale. Die allgemeine Idee der Erfindung ist nicht beschränkt auf die exakte Form oder das Detail der im folgenden gezeigten und beschriebenen bevorzugten Ausführungsformen oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsformen sowie anhand der folgenden Figuren. Im Einzelnen zeigen:
- Fig. 1: ein erstes Ausführungsbeispiel eines erfindungsgemäßen elektromechanischen Bremsaktuators in einer Seitenansicht;
- Fig. 2: das Ausführungsbeispiel des erfindungsgemäßen elektromechanischen Bremsenaktuators gemäß Figur 1 in einer weiteren Seitenansicht;
- Fig. 3: das Ausführungsbeispiel des erfindungsgemäßen elektromechanischen Bremsenaktuators gemäß der Figuren 1 und 2 in einer Teilschnitt-Seitenansicht;
- Fig. 4: ein zweites Ausführungsbeispiel eines erfindungsgemäßen elektromechanischen Bremsenaktuators in einer Draufsicht;
- Fig. 5: eine Draufsicht auf den Aktuator gemäß Figur 4;
- Fig. 6: das Ausführungsbeispiel des erfindungsgemäßen elektromechanischen Bremsenaktuators gemäß der Figuren 4 und 5 in einer Ansicht von schräg oben ohne Gehäuse;
- Fig. 7: das Ausführungsbeispiel des erfindungsgemäßen elektromechanischen Bremsenaktuators gemäß der Figuren 4-6 in einer Ansicht von schräg oben;
- Fig. 8: das Ausführungsbeispiel des erfindungsgemäßen elektromechanischen Bremsenaktuators gemäß der Figuren 4-7 in einer Teilschnitt-Ansicht;
- Fig. 9: das Ausführungsbeispiel des erfindungsgemäßen elektromechanischen Bremsenaktuators gemäß der Figuren 4-8 in einer Seitenansicht ohne Gehäuse;
- Fig. 10: das Ausführungsbeispiel des erfindungsgemäßen elektromechanischen Bremsenaktuators gemäß der Figuren 4-9 mit verschlossenem Gehäuse;
- Fig. 11: ein drittes Ausführungsbeispiel eines erfindungsgemäßen elektromechanischen Bremsenaktuators sowie einer erfindungsgemäßen Scheibenbremse in einer Seitenansicht;
- Fig. 12: ein viertes Ausführungsbeispiel eines erfindungsgemäßen elektromechanischen Bremsenaktuators in einem axial-Teilschnitt; und
- Fig. 13: das Ausführungsbeispiel des erfindungsgemäßen elektromechanischen Bremsenaktuators gemäß Figur 12 in einer Draufsicht auf die Kurvenscheibe.

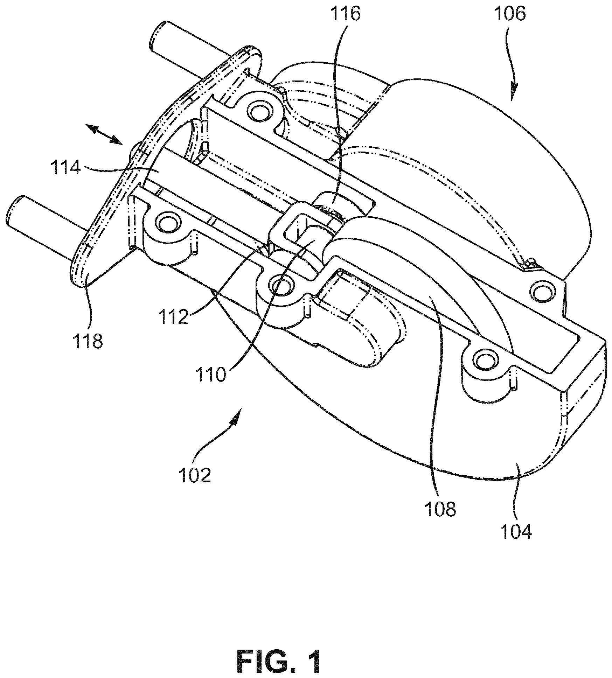

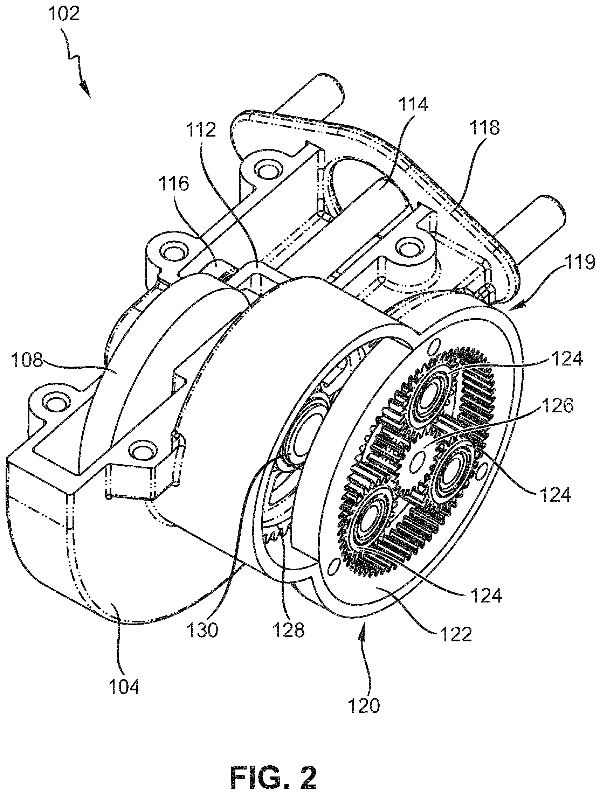

Figur 1 zeigt einen elektromechanischen Bremsaktuator 102 mit einem Gehäuse 104. Der elektromechanische Bremsenaktuator 102 weist einen Elektromotor 106 auf. Über ein Getriebe (vgl. Fig. 2) wird das Antriebsdrehmoment des Elektromotors 106 an eine Kurvenscheibe 108 übertragen. Die Kurvenscheibe 108 dient der nichtlinearen Übertragung der Rotationsbewegung der Kurvenscheibe 108 an einen Bremsstößel 114.

Der Bremsstößel 114 kann insbesondere linear in Richtung der dargestellten Pfeilrichtung ausgelenkt werden. An seinem der Kurvenscheibe 108 zugewandten Ende verfügt der Bremsstößel 114 über einen Stößelkopf 112. Dieser Stößelkopf 112 umschließt einen Wälzkörper 110, der mittels der Lager 116 gelagert ist. Der Wälzkörper 110 gleitet auf dem Umfang der Kurvenscheibe 108 ab. Hiermit wird eine Übertragung der Rotationsbewegung der Kurvenscheibe 108 in eine Linearbewegung des Bremsstößels 114 erzielt. Über einen Verbindungsabschnitt 118 ist der elektromechanische Bremsenaktuator 102 insbesondere mit einer Bremse (nicht dargestellt) verbindbar.

In Figur 2 ist das bereits angesprochene Getriebe 119 detailliert. Das Getriebe 119 ist zweistufig ausgebildet. Die erste Stufe des Getriebes 119 ist als Umlaufrädergetriebe 120 ausgebildet. Das Umlaufrädergetriebe 120 weist ein Hohlrad 122 auf, Umlaufräder 124 sowie ein Sonnenrad 126. In an sich bekannter Weise findet in dem Umlaufrädergetriebe 120 eine Wandlung der Bewegungsgrößen des Elektromotors 106 statt. Dem Umlaufrädergetriebe 120 nachgelagert ist ein Stirnradgetriebe 128. Dieses Stirnradgetriebe 128 ist mit dem Umlaufrädergetriebe 120 über ein weiteres Stirnradgetriebe (nicht sichtbar) verbunden. Das Stirnradgetriebe 128 befindet sich auf einer Welle 130, auf der auch die Kurvenscheibe 108 angebracht ist. Somit erfolgt eine Übertragung des Antriebsdrehmoments von dem Elektromotor 106 über das Getriebe 119 und die Welle 130 an die Kurvenscheibe 108. Es soll verstanden werden, dass das Getriebe 119 erfindungsgemäß prinzipiell entlang der gesamten 360° um die Drehachse der Kurvenscheibe 108 herum angeordnet werden kann, um verschiedenen Bauraumsituationen gerecht zu werden.

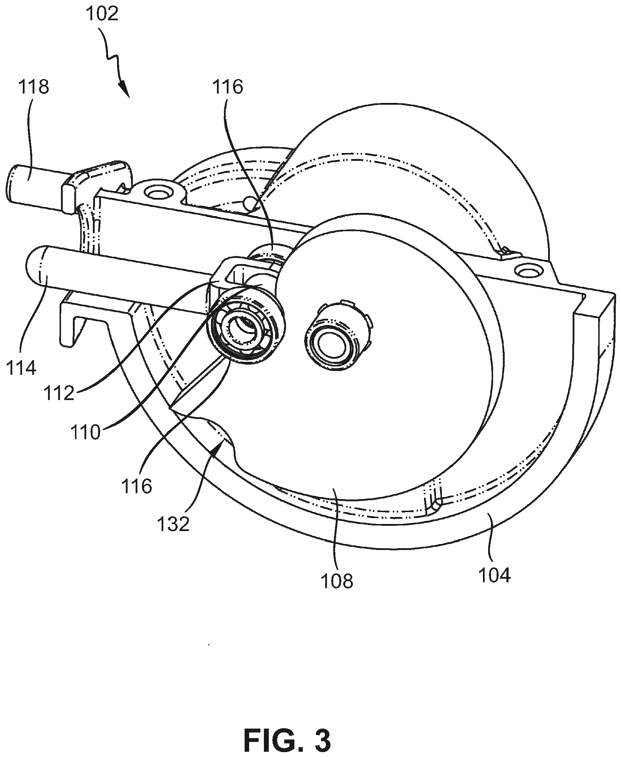

Eine beispielhafte Ausbildung der Kurvenscheibe 108 ist Figur 3 zu entnehmen. Wie in Figur 3 dargestellt, befindet sich der Stößel 114 in einer vollständig eingefahrenen Ausgangsposition. Der Abstand zwischen dem Wälzkörper 110 des Stößelkopfes 112 zur Drehachse der Kurvenscheibe 108 ist hier am Geringsten. Wird nun die Kurvenscheibe 108 gegen den Uhrzeigersinn rotiert, so findet aufgrund der Ausformung der Kurvenscheibe 108 eine Translation des Bremsstößels 114 statt. Dieses rührt insbesondere daher, dass bei zunehmender Rotation der Kurvenscheibe 108 aus der Ausgangsposition der Kontaktwinkel zwischen Bremsstößel 114 und Kurvenscheibe 108 relativ zu der Stößelachse kleiner wird.

Dieses bewirkt weiterhin, dass eine Drehwinkeländerung der Kurvenscheibe 108 bei einer derartigen Ausformung der Kurvenscheibe 108 dazu führt, dass eine Drehwinkeländerung der Kurvenscheibe 108 in einem Bereich kleiner Auslenkungen des Bremsstößels 114 zur Überwindung einer größeren Strecke auf Seiten des Bremsstößels 114 bei kleinerer übertragener Bremskraft führt und wobei im Bereich der Maximalauslenkung 114 des Bremsstößels eine äquivalente Drehwinkeländerung der Kurvenscheibe 108 eine kleinere Auslenkung des Bremsstößels 114 bei höherer übertragener Bremskraft zur Folge hat.

Ferner verfügt die Kurvenscheibe 108 über eine Einbuchtung 132. Bei Rotation der Kurvenscheibe 108 gelangt die Einbuchtung 132 in Kontakt mit dem Wälzkörper des Bremsstößels 114. Befindet sich der Wälzkörper 110 in dieser Position der Kurvenscheibe 108 in der Einbuchtung 132, so verbleibt die Kurvenscheibe 108 und damit der Bremsstößel 114 in dieser Position, auch wenn der Elektromotor 106 keine weitere Energie zuführt. Somit wird über die Positionierung der Einbuchtung 132 eine Parkbremsposition definiert, bei der der Bremsstößel 114 in einer gewünschten Auslenkung einrastet.

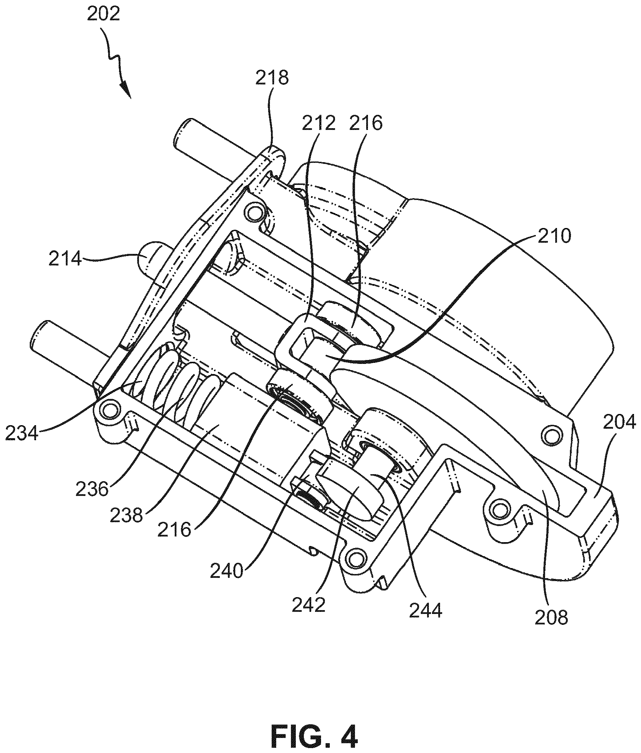

Ein zweites Ausführungsbeispiel des elektromechanischen Bremsenaktuators 202 ist in Figur 4 dargestellt. Der elektromechanische Bremsenaktuator 202 verfügt erneut über ein Gehäuse 204, sowie einen Elektromotor, dem ein Getriebe nachgelagert ist (beide Bauteile nicht in Figur 4 dargestellt). Ein Antriebsdrehmoment wird in bekannter Weise auf die Kurvenscheibe 208 übertragen. Erneut dient die Kurvenscheibe 208 dazu, die Rotationsbewegung des Antriebes in eine translatorische Bewegung des Bremsstößels 214 zu übertragen. Der Bremsstößel 214 verfügt über einen Bremsstößelkopf 212, welcher einen Wälzkörper 210 umschließt, der mithilfe der Lager 216 gelagert ist. An der Welle (nicht dargestellt) ist eine Nockenwelle 244 mit einem Nocken 242 angeordnet. Der Nocken 242 ist mittels des Wälzkörpers 240 und der Federführung 238 dazu eingerichtet, ein Federelement 236, die in dem Federlager 234 geführt ist und in dem Gehäuse 204 befestigt ist, zu betätigen. Hierbei ist vorgesehen, dass der Nocken 242 in einem ersten Bewegungsbereich das Federelement 236 komprimiert und damit spannt und Energie speichert und in einem zweiten Bewegungsbereich die in dem Federelement 236 gespeicherte Energie aufnimmt und an die Nockenwelle 244, die mit der Kurvenscheibe 208 gekoppelt ist, abgibt. Darüber hinaus ist der Nocken 244 dazu eingerichtet eine Rastposition zu definieren. Während in den Figuren eine spezifische Anordnung der Energiespeicher- und Abgabe Bauelemente (Nocken 242, Wälzkörper 240, Federführung 238, Federelement 236, Federlager 234) gezeigt ist, soll verstanden werden, dass diese Elemente erfindungsgemäß prinzipiell frei bezüglich um die Drehachse der Kurvenscheibe 208 herum angeordnet werden können, um spezifischen Bauraumanforderungen, beispielsweise im Fahrzeug, bestmöglich gerecht zu werden.

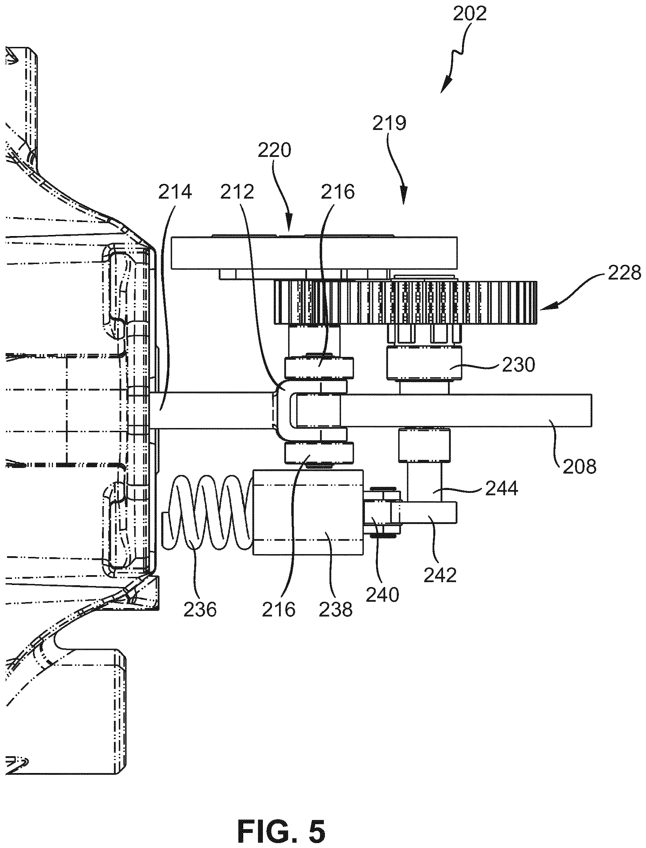

In Figur 5 ist eine Draufsicht der bereits aus Figur 4 bekannten Ausführungsform ohne das betreffende Gehäuse gezeigt. Figur 5 kann nun der Aufbau des Getriebes 219 entnommen werden. Das Getriebe 219 weist als eine erste Stufe das Umlaufrädergetriebe 220 auf. Mittels eines Stirnradgetriebes 228, findet eine weitere Drehzahlreduktion und -momenterhöhung in dem Getriebe 219 statt. Dem Getriebe 219 nachgeschaltet ist die Welle 230 auf welcher die Kurvenscheibe 208 befestigt ist.

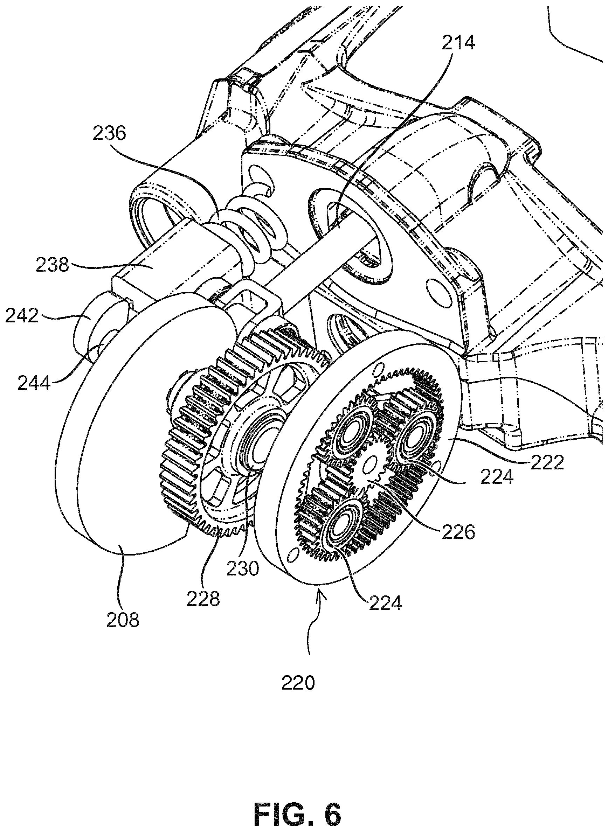

Figur 6 zeigt eine Seitenansicht des zweiten Ausführungsbeispiels. Diesem kann insbesondere der Aufbau des Umlaufrädergetriebes 220 entnommen werden. Dieses weist in an sich bekannter Weise ein Hohlrad 222 auf in welchem die Umlaufräder 224 angeordnet sind. Zentral befindet sich in dem Umlaufrädergetriebe 220 das Sonnenrad 226.

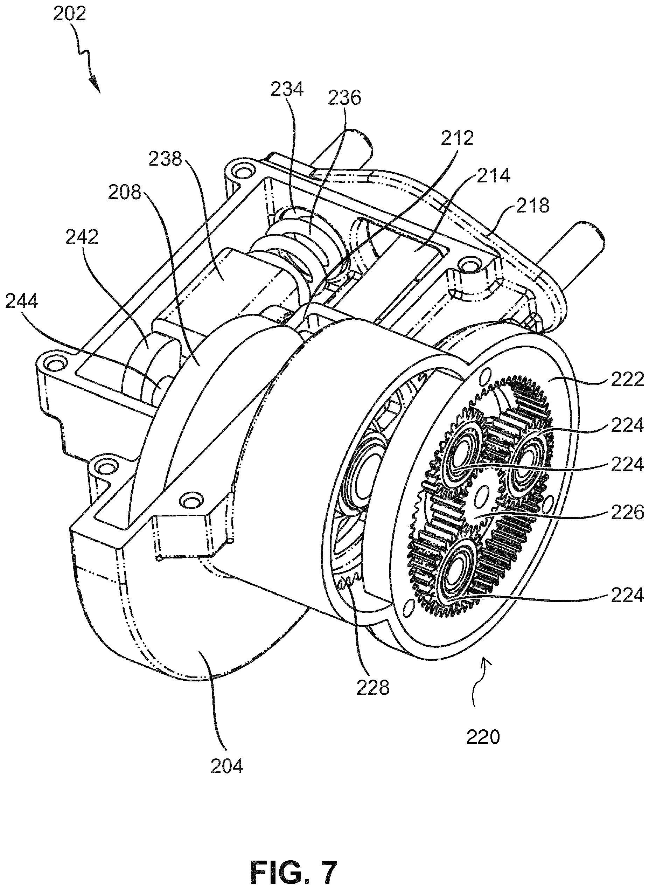

Figur 7 zeigt eine Seitenansicht des zweiten Ausführungsbeispiels in einer Teilschnittdarstellung.

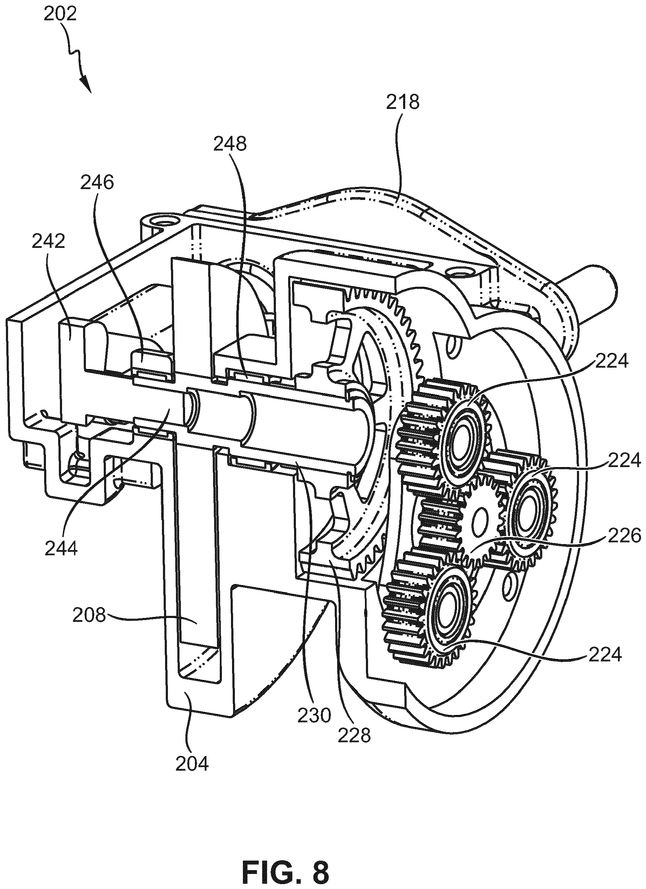

In Figur 8 ist eine Schnittansicht des elektromechanischen Bremsenaktuators 202 mit Schnittebene entlang der Welle 230 dargestellt. Wie aus der Figur zu entnehmen, ist die Welle 230 nicht Bauteilgleich mit der Nockenwelle 244 ausgebildet, mit dieser jedoch insbesondere kraftschlüssig verbunden.

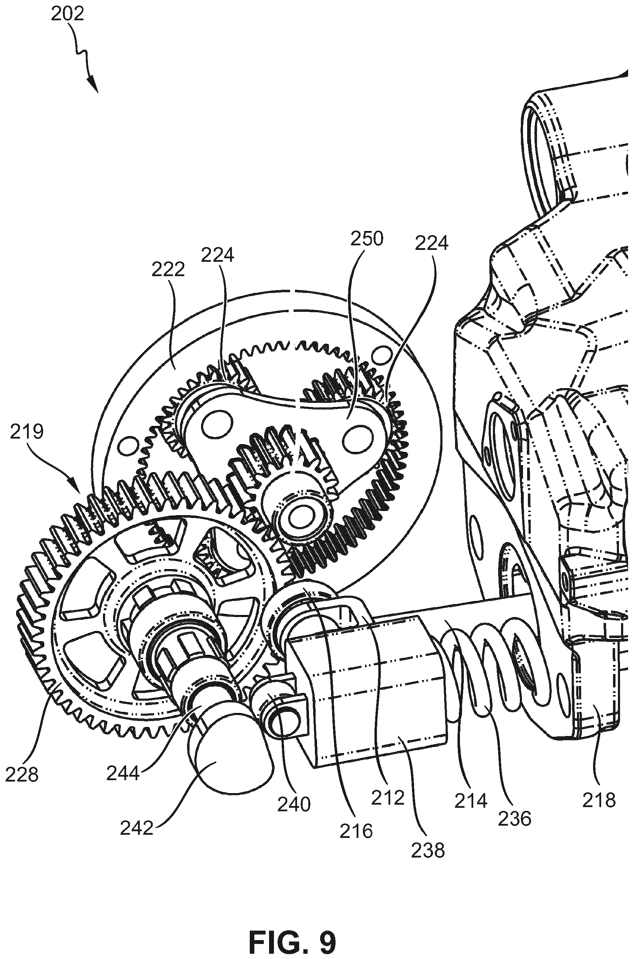

In Figur 9 ist das Getriebe 219 freigestellt. Erweiternd zu den bereits diskutierten Abbildungen kann Figur 9 entnommen werden, dass die Umlaufräder 224 auf einem Steg 250 angeordnet sind.

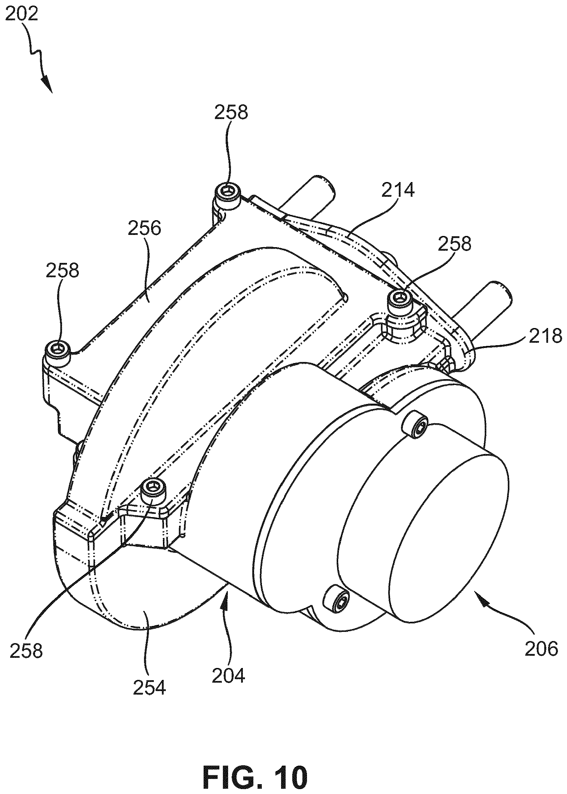

Figur 10 zeigt das geschlossene Gehäuse 204 des elektromechanischen Bremsenaktuators 202. Das Gehäuse 204 weist einen ersten Gehäuseabschnitt 254 und einen zweiten Gehäuseabschnitt 256 auf. Die Gehäuseabschnitte 254 und 256 sind mittels der Schrauben 258 miteinander verbunden.

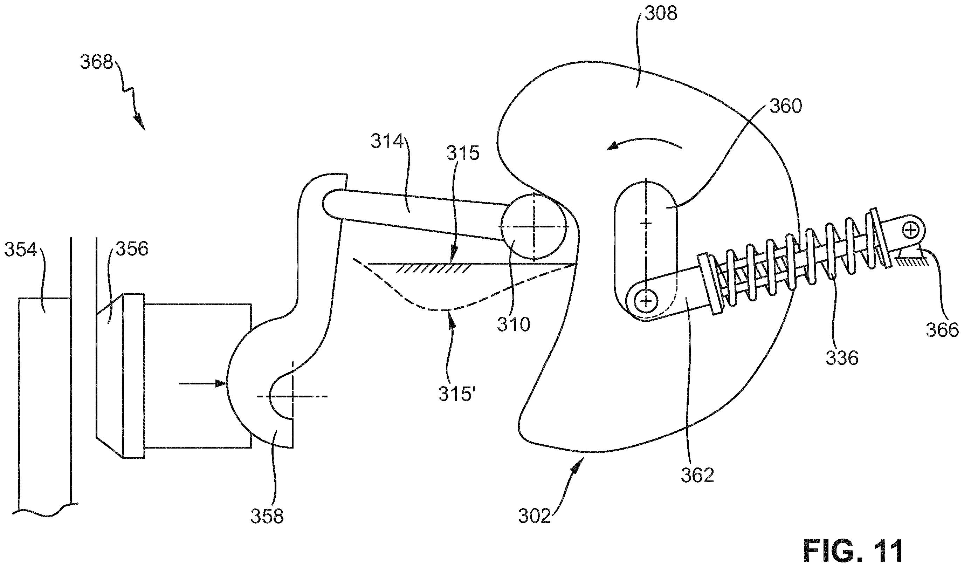

Figur 11 zeigt ein drittes Ausführungsbeispiel eines erfindungsgemäßen elektromechanischen Bremsaktuators 302 sowie einer erfindungsgemäßen Scheibenbremse 368 in einer Seitenansicht. Das Wirkprinzip der Scheibenbremse 368 besteht darin, dass ein Bremsbelag 356 nach Überwindung eines Luftspaltes an eine Bremsscheibe 354 gedrückt wird. Die auftretende Reibung bremst ein mit der Bremsscheibe 354 verbundenes Rad (nicht dargestellt) ab. Alternativ kann in der Scheibenbremse 368 ein elektromechanischer Bremsaktuator 102, 202, 402 gemäß einem der übrigen Ausführungsbeispiele verbaut sein.

Die hierzu erforderliche Kraft wird über den Bremshebel 358 an den Bremsbelag 356 übertragen. Der Bremshebel 358 wird wiederum von dem Bremsstößel 314 betätigt. Dieser wird in bekannter Weise von der Kurvenscheibe 308 betätigt.

Im Hinblick auf die Führung des Bremsstößels 314 sind zwei alternative Bremsstößel-Führungen gezeigt 315, 315' gezeigt. Die gerade Bremsstößel-Führung 315 dient der rein-linearen (translatorischen) Führung des Bremsstößels 314.

Alternativ kann eine gekrümmte Bremsstößel-Führung 315' vorgesehen sein, welche eine nichtlineare Führung des Bremsstößels 314 ermöglicht.

Der hier dargestellte elektromechanische Bremsenaktuator 302 verfügt darüber hinaus über einen Hebel 360 der mit der Kurvenscheibe 308 gekoppelt ist. An dem Hebel 360 ist ein Federkopf 362 befestigt, der wiederum mit einem Federelement 336 verbunden ist. Am anderen Ende des Federelements 336 befindet sich ein Lager 366. Erneut ist das Federelement 336 dazu eingerichtet, in Abhängigkeit vom Drehwinkel des Hebels 360 und somit der Kurvenscheibe 308, Energie an das Federelement 336 abzugeben so dass diese komprimiert wird und Energie speichert. Darüber hinaus ist das Federelement 336 dazu eingerichtet, Energie über den Federkopf 362 an den Hebel 360 und die Kurvenscheibe 308 in Abhängigkeit ihres Drehwinkelbereiches zu übertragen. Hinsichtlich des grundlegenden Wirkprinzips sei auf die obigen Ausführungen verwiesen. Es soll verstanden werden, dass die Anordnung aus Hebel 360 und den korrespondierenden Energiespeicher- und Abgabe Bauelementen (Federkopf 362, Lager 366, Feder 336) erfindungsgemäß prinzipiell frei um die Kurvenscheibe 308 platziert werden kann.

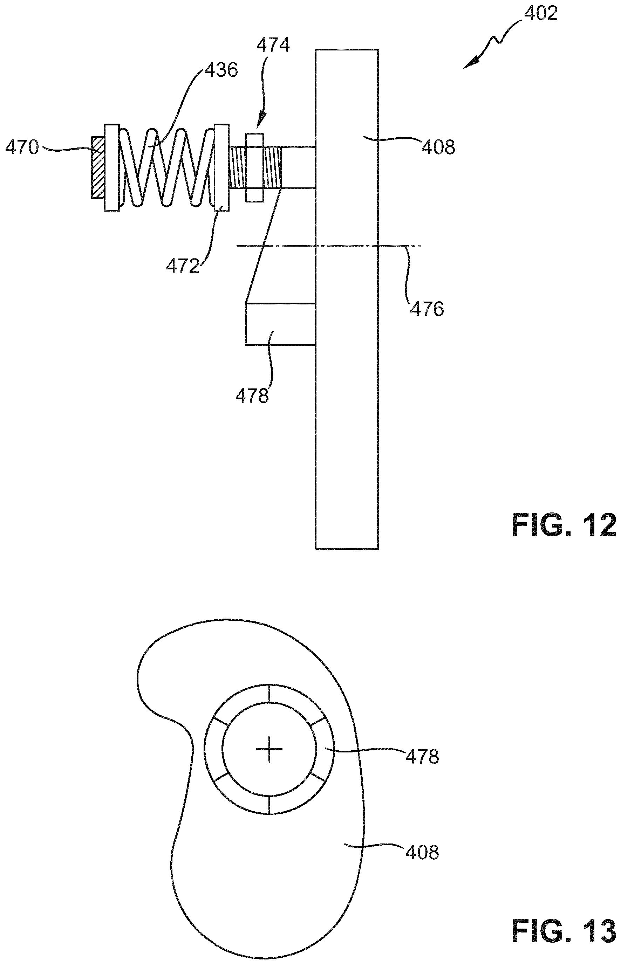

Eine weitere alternative Ausführungsform dieser Einrichtung zum Speichern und abgeben von Energie ist in Figur 12 dargestellt. Auf die Kurvenscheibe 408 ist eine Axialbahn 478 aufgebracht. Diese Axialbahn 478 erstreckt sich in Axialrichtung auf einer Seite der Kurvenscheibe 408 und weist unterschiedliche Axialausdehnungen aus. Mit der Axialbahn 478 steht ein Rollenlager 474 in Kontakt, welches über einen Federkopf 472 auf ein Federelement 436 wirkt. Das Federelement 436 ist mittels eines Lagers 470 ortsfest gelagert.

Bei Rotation der Kurvenscheibe 408 folgt das Rollenlager 474 der Axialbahn 478 in Axialrichtung. Bewegt sich das Rollenlager 474 dabei in Richtung des Lagers 470 wird das zwischen Lager 470 und Federkopf 472 angeordnete Federelement 436 komprimiert und mithin in dieser Energie gespeichert.

Bewegt sich das Rollenlager 474 hingegen auf einem solchen Abschnitt der Axialbahn 478, bei dem sich das Rollenlager 474 in Richtung der Kurvenscheibe 408 bewegt, so unterstützt das Federelement 436 die Rotationsbewegung der Kurvenscheibe 408 und gibt mithin ihre gespeicherte Energie an diese ab. Es soll verstanden werden, dass die Positionierung der Axialbahn 478 prinzipiell auf beiden Seiten der Kurvenschreibe 408 möglich ist.

In Figur 13 ist eine Draufsicht einer solchen mit einer Axialbahn 478 versehenen Kurvenscheibe 408 dargestellt. Die Axialbahn 478 ist dabei zentriert um die Drehachse 476 der Kurvenscheibe 408 angeordnet.

### Bezugszeichenlist (Teil der Beschreibung)

- 102: Elektromechanischer Bremsenaktuator
- 104: Gehäuse
- 106: Elektromotor
- 108: Kurvenscheibe
- 110: Wälzkörper
- 112: Stößelkopf
- 114: Bremsstößel
- 116: Lager
- 118: Verbindungsabschnitt
- 119: Getriebe
- 120: Umlaufrädergetriebe
- 122: Hohlrad
- 124: Umlaufräder
- 126: Sonnenrad
- 128: Stirnradgetriebe
- 130: Welle
- 132: Einbuchtung
- 202: Elektromechanischer Bremsenaktuator
- 204: Gehäuse
- 206: Elektromotor
- 208: Kurvenscheibe
- 210: Wälzkörper
- 212: Stößelkopf
- 214: Bremsstößel
- 216: Lager
- 218: Verbindungsabschnitt
- 219: Getriebe
- 220: Umlaufrädergetriebe
- 222: Hohlrad
- 224: Umlaufräder
- 226: Sonnenrad
- 228: Stirnradgetriebe
- 230: Welle
- 234: Federlager
- 236: Federelement
- 238: Federführung
- 240: Wälzkörper
- 242: Nocken
- 244: Nockenwelle
- 246: Wellenlager
- 248: Wellenlager
- 250: Steg
- 254: Erster Gehäuseabschnitt
- 256: Zweiter Gehäuseabschnitt
- 258: Schraube
- 302: Elektromechanischer Bremsenaktuator
- 308: Kurvenscheibe
- 310: Wälzkörper
- 314: Bremsstößel
- 315: Gerade Bremsstößelführung
- 315': Gekrümmte Bremsstößelführung
- 336: Federelement
- 354: Bremsscheibe
- 356: Bremsbelag
- 358: Bremshebel
- 360: Hebel
- 362: Federkopf
- 366: Lager
- 368: Scheibenbremse
- 402: elektromechanischer Bremsenaktuator
- 408: Kurvenscheibe
- 436: Federelement
- 470: Lager
- 472: Federkopf
- 474: Rollenlager
- 476: Drehachse
- 478: Axialbahn

## Patentansprüche

1. Elektromechanischer Bremsenaktuator (102, 202, 302, 402) einer Nutzfahrzeug-Scheibenbremse, mit: - einem Elektromotor (106, 206) zum Erzeugen eines Antriebs-Drehmoments, - einer mit dem Elektromotor (106, 206) wirkverbundenen, rotatorisch beweglich gelagerten Kurvenscheibe (108, 208, 308, 408), und - einem entlang einer Stößelachse beweglichen Bremsstößel (114, 214, 314) zur Betätigung eines Bremshebels (358) der Bremse (368), wobei der Bremsstößel (114, 214, 314) an seinem der Kurvenscheibe (108, 208, 308, 408) zugewandten Ende über einen Stößelkopf (112) verfügt und der Stößelkopf (112) einen Wälzkörper (110) umschließt, der mittels Lager (116) gelagert ist, **dadurch gekennzeichnet, dass** die Kurvenscheibe (108, 208, 308, 408) und der Bremsstößel (114, 214, 314) miteinander in Anlage stehende Kontaktflächen aufweisen, welche zur direkten Übertragung des Antriebs-Drehmoments zwischen Kurvenscheibe (108, 208, 308, 408) und Bremsstößel (114, 214, 314) aneinander abgleiten oder abrollen.

2. Elektromechanischer Bremsenaktuator r (102, 202, 302, 402) nach Anspruch 1,
**dadurch gekennzeichnet, dass** die Kontaktfläche der Kurvenscheibe (108, 208, 308, 408) derart ausgebildet ist, dass in Abhängigkeit von der Winkelstellung zwischen Kurvenscheibe (108, 208, 308, 408) und Achse des Bremsstößels (114, 214, 314) eine nichtlineare Kraftübertragung von der Kurvenscheibe (108, 208, 308, 408) auf den Bremsstößel (114, 214, 314) erfolgt.

3. Elektromechanischer Bremsenaktuator (102, 202, 302, 402) nach einem der vorhergehenden Ansprüche,
**dadurch gekennzeichnet, dass** der Bremsstößel (114, 214, 314) zwischen einer zurückgezogenen Position und einer ausgelenkten Position hin und her bewegbar ist, und die Kurvenscheibe (108, 208, 308, 408) zwischen einer Ausgangsposition und einer Endposition hin und her bewegbar ist, wobei die Ausgangsposition der Kurvenscheibe (108, 208, 308, 408) mit der zurückgezogenen Position der des Bremsstößels (114, 214, 314) korrespondiert und die Endposition der Kurvenscheibe (108, 208, 308, 408) mit der ausgelenkten Position des Bremsstößels (114, 214, 314) korrespondiert.

4. Elektromechanischer Bremsenaktuator (102, 202, 302, 402) nach Anspruch 3,
wobei die Kontaktflächen des Bremsstößels (114, 214, 314) und der Kurvenscheibe (108, 208, 308, 408) in einem Kontaktpunkt aneinander anliegen, und in dem Kontaktpunkt einen Kontaktwinkel relativ zu der Achse des Stößels (114, 214, 314) definieren, und bei zunehmender Rotation der Kurvenscheibe (108, 208, 308, 408) aus der Ausgangsposition der Kontaktwinkel kleiner wird.

5. Elektromechanischer Bremsenaktuator (102, 202, 302, 402) nach einem der vorhergehenden Ansprüche,
**gekennzeichnet durch** ein Getriebe (119, 219) welches von dem Elektromotor (106, 206) angetrieben wird und welches mit der Kurvenscheibe (108, 208, 308, 408) wirkverbunden ist.

6. Elektromechanischer Bremsenaktuator (102) nach einem der vorhergehenden Ansprüche,
**dadurch gekennzeichnet, dass** die Kurvenscheibe (108) eine Einbuchtung (132) zur Definition einer Parkbremsposition in ihrem Umfang aufweist, wobei die Einbuchtung (132) zwischen einem Kontaktpunkt mit dem Bremsstößel (114) in der Ausgangsposition und einem Kontaktpunkt mit dem Bremsstößel (114) in der Endposition angeordnet ist.

7. Elektromechanischer Bremsenaktuator (102) nach Anspruch 6, **dadurch gekennzeichnet, dass** die Einbuchtung (132) so angeordnet ist, dass der Bremsstößel (114), wenn er in der Einbuchtung (132) angeordnet ist, eine Bremsleistung in einem Bereich von etwa 80% bis etwa 100% der Gesamtbremsleistung überträgt.

8. Elektromechanischer Bremsenaktuator (202, 302) nach einem der vorhergehenden Ansprüche,
**gekennzeichnet durch** ein Federelement (236, 336, 436), welches derart mit dem Elektromotor (206) wirkverbunden ist, dass in einem ersten Auslenkungsstreckenbereich des Bremsstößels Energie gespeichert wird und in einem zweiten Auslenkungsstreckenbereich des Bremsstößels Energie an den Bremsstößel abgegeben wird.

9. Elektromechanischer Bremsenaktuator (202) nach Anspruch 8, **dadurch gekennzeichnet, dass** das Federelement (236) eine Interaktionsfläche aufweist, die mit einer Umfangsfläche eines von dem Elektromotor angetrieben Nockens (242) in Anlage steht, wobei die Interaktionsfläche des Federelements (236) und die Umfangsfläche des Nockens (242) aneinander abgleiten oder abrollen, und die Umfangsfläche des Nockens (242) derart geformt ist, dass in einem ersten Drehwinkelbereich des Nockens (242) Energie in dem Federelement (236) gespeichert wird, und einem zweiten Drehwinkelbereich Energie von dem Federelement (236) abgegeben wird.

10. Elektromechanischer Bremsenaktuator (202) nach Anspruch 9, **dadurch gekennzeichnet, dass** der Nocken (242) einen dritten Drehwinkelbereich aufweist, bei dem der Abstand von der Welle des Nockens (242) zum Umfang des Nockens (242) im Wesentlichen konstant ist.

11. Elektromechanischer Bremsenaktuator (202) nach Anspruch 10 oder 11, **dadurch gekennzeichnet, dass** die Federkraft des Federelements (236) in dem dritten Drehwinkelbereich des Nockens (242) eine Rotation des Nocken (242) so hemmt, das bei Wegfall des Antriebs-Drehmoments des Elektromotors (206) der Bremsstößel (214) in der korrespondierenden Auslenkung gehalten wird.

12. Elektromechanischer Bremsenaktuator (402) nach einem der Ansprüche 8 bis 11,
**dadurch gekennzeichnet, dass** das Federelement (436) einen Federkopf (472) aufweist, der mit einer an der Kurvenscheibe (408) in Axialrichtung aufgebrachten Bahn (478) in Anlage steht, die so eingerichtet ist, dass in Abhängigkeit von dem Drehwinkelbereich der Kurvenscheibe (408) Energie in dem Federelement (436) gespeichert wird, und einem zweiten Drehwinkelbereich Energie von dem Federelement (436) abgegeben wird.

13. Elektromechanischer Bremsenaktuator (302) nach einem der Ansprüche 8 bis 13,
**dadurch gekennzeichnet, dass** das Federelement (336) mit einem an der Kurvenscheibe (308) angeordneten Hebel (360) in Anlage steht, der so eingerichtet ist, dass in Abhängigkeit von dem Drehwinkelbereich der Kurvenscheibe (308) Energie in dem Federelement (336) gespeichert wird, und in einem zweiten Drehwinkelbereich Energie von dem Federelement (336) abgegeben wird.

14. Elektromechanischer Bremsenaktuator (102, 202, 302, 402) nach einem der vorstehenden Ansprüche,
**dadurch gekennzeichnet, dass** der Bremsstößel (114, 214, 314) zur Betätigung des Bremshebels (358) linear geführt entlang der Stößelachse beweglich ist.

15. Elektromechanischer Bremsenaktuator (102, 202, 302, 402) nach einem der Ansprüche 1-13,
**dadurch gekennzeichnet, dass** der Bremsstößel (314) zur Betätigung des Bremshebels (358) nichtlinear geführt beweglich ist.

16. Scheibenbremse (368), insbesondere Nutzfahrzeugscheibenbremse mit:
- einer Bremsscheibe (354),
- mindestens einem Bremsbelag (356) zum Erzeugen einer Bremswirkung mittels Andrücken an die Bremsscheibe (354),
- einem um eine Hebelachse schwenkbar gelagerten Bremshebel (358) zum Andrücken des mindestens einen Bremsbelags (356) an die Bremsscheibe (354), und
- einem in Richtung einer Stößelachse beweglichen Bremsstößel (314), der mit dem Bremshebel (358) gekoppelt ist, um die Schwenkbewegung des Bremshebels (358) um die Hebelachse zu bewirken, und
- einem elektromagnetischen Bremsaktuator (102, 202, 302, 402), der mit dem Bremsstößel (314) gekoppelt ist, um dessen Bewegung in Richtung der Stößelachse zu bewirken,
**dadurch gekennzeichnet, dass** der elektromechanische Bremsaktuator (102, 202, 302, 402) nach einem der vorstehenden Ansprüche ausgebildet ist.

## Claims

1. Electromechanical brake actuator (102, 202, 302, 402) of a commercial vehicle disk brake, having:
- an electric motor (106, 206) for generating a drive torque,
- a cam disk (108, 208, 308, 408) which is operatively connected to the electric motor (106, 206) and is mounted in a rotationally movable manner, and
- a brake plunger (114, 214, 314) which can be moved along a plunger axis for the actuation of a brake lever (358) of the brake (368),
the brake plunger (114, 214, 314), at its end facing the cam disk (108, 208, 308, 408), having a plunger head (112), and the plunger head (112) enclosing a rolling element (110) which is mounted by means of bearings (116), **characterized in that** the cam disk (108, 208, 308, 408) and the brake plunger (114, 214, 314) have contact faces which are in contact with one another and slide or roll on one another for the direct transmission of the drive torque between the cam disk (108, 208, 308, 408) and the brake plunger (114, 214, 314) .

2. Electromechanical brake actuator (102, 202, 302, 402) according to Claim 1,
**characterized in that** the contact face of the cam disk (108, 208, 308, 408) is configured in such a way that a non-linear transmission of force takes place from the cam disk (108, 208, 308, 408) to the brake plunger (114, 214, 314) in a manner which is dependent on the angular position between the cam disk (108, 208, 308, 408) and the axis of the brake plunger (114, 214, 314).

3. Electromechanical brake actuator (102, 202, 302, 402) according to either of the preceding claims, **characterized in that** the brake plunger (114, 214, 314) can be moved to and fro between a withdrawn position and a deflected position, and the cam disk (108, 208, 308, 408) can be moved to and fro between a starting position and an end position, the starting position of the cam disk (108, 208, 308, 408) corresponding with the withdrawn position of the brake plunger (114, 214, 314), and the end position of the cam disk (108, 208, 308, 408) corresponding with the deflected position of the brake plunger (114, 214, 314).

4. Electromechanical brake actuator (102, 202, 302, 402) according to Claim 3,
the contact faces of the brake plunger (114, 214, 314) and the cam disk (108, 208, 308, 408) bearing against one another at a contact point, and defining a contact angle relative to the axis of the plunger (114, 214, 314) at the contact point, and the contact angle decreasing in size from the starting position in the case of an increasing rotation of the cam disk (108, 208, 308, 408).

5. Electromechanical brake actuator (102, 202, 302, 402) according to one of the preceding claims, **characterized by** a gear mechanism (119, 219) which is driven by the electric motor (106, 206) and which is operatively connected to the cam disk (108, 208, 308, 408) .

6. Electromechanical brake actuator (102) according to one of the preceding claims,
**characterized in that** the cam disk (108) has an indentation (132) in its circumference for defining a parking brake position, the indentation (132) being arranged between a contact point with the brake plunger (114) in the starting position and a contact point with the brake plunger (114) in the end position.

7. Electromechanical brake actuator (102) according to Claim 6,
**characterized in that** the indentation (132) is arranged in such a way that the brake plunger (114) transmits a brake power in a range of from approximately 80% to approximately 100% of the overall brake power when it is arranged in the indentation (132).

8. Electromechanical brake actuator (202, 302) according to one of the preceding claims,
**characterized by** a spring element (236, 336, 436) which is operatively connected to the electric motor (206) in such a way that energy is stored in a first deflection distance region of the brake plunger, and energy is output to the brake plunger in a second deflection distance region of the brake plunger.

9. Electromechanical brake actuator (202) according to Claim 8,
**characterized in that** the spring element (236) has an interaction face which is in contact with a circumferential face of a cam (242) which is driven by the electric motor, the interaction face of the spring element (236) and the circumferential face of the cam (242) sliding or rolling on one another, and the circumferential face of the cam (242) being shaped in such a way that energy is stored in the spring element (236) in a first rotational angular range of the cam (242), and energy is output from the spring element (236) in a second rotational angular range.

10. Electromechanical brake actuator (202) according to Claim 9,
**characterized in that** the cam (242) has a third rotational angular range, in the case of which the spacing of the shaft of the cam (242) from the circumference of the cam (242) is substantially constant.

11. Electromechanical brake actuator (202) according to Claim 10 or 11,
**characterized in that** the spring force of the spring element (236) inhibits a rotation of the cam (242) in the third rotational angular range of the cam (242) in such a way that, in the case of a discontinuation of the drive torque of the electric motor (206), the brake plunger (214) is held in the corresponding deflection.

12. Electromechanical brake actuator (402) according to one of Claims 8 to 11,
**characterized in that** the spring element (436) has a spring head (472) which is in contact with a track (478) which is applied on the cam disk (408) in the axial direction and is set up in such a way that energy is stored in the spring element (436) in a manner which is dependent on the rotational angular range of the cam disk (408), and energy is output from the spring element (436) in a second rotational angular range.

13. Electromechanical brake actuator (302) according to one of Claims 8 to 13,
**characterized in that** the spring element (336) is in contact with a lever (360) which is arranged on the cam disk (308) and is set up in such a way that energy is stored in the spring element (336) in a manner which is dependent on the rotational angular range of the cam disk (308), and energy is output from the spring element (336) in a second rotational angular range.

14. Electromechanical brake actuator (102, 202, 302, 402) according to one of the preceding claims, **characterized in that** the brake plunger (114, 214, 314) can be moved in a linearly guided manner along the plunger axis for the actuation of the brake lever (358).

15. Electromechanical brake actuator (102, 202, 302, 402) according to one of Claims 1-13,
**characterized in that** the brake plunger (314) can be moved in a non-linearly guided manner for the actuation of the brake lever (358).

16. Disk brake (368), in particular commercial vehicle disk brake having:
- a brake disk (354),
- at least one brake lining (356) for the generation of a brake action by means of being pressed onto the brake disk (354),
- a brake lever (358) which is mounted such that it can be pivoted about a lever axis for pressing the at least one brake lining (356) onto the brake disk (354), and
- a brake plunger (314) which can be moved in the direction of a plunger axis and is coupled to the brake lever (358), in order to bring about the pivoting movement of the brake lever (358) about the lever axis, and
- an electromagnetic brake actuator (102, 202, 302, 402) which is coupled to the brake plunger (314), in order to bring about its movement in the direction of the plunger axis,
**characterized in that** the electromechanical brake actuator (102, 202, 302, 402) is configured according to one of the preceding claims.

## Revendications

1. Actionneur de frein électromécanique (102, 202, 302, 402) d'un frein à disque de véhicule utilitaire, ledit actionneur comprenant : - un moteur électrique (106, 206) destiné à générer un couple d'entraînement, - une came (108, 208, 308, 408) qui est reliée fonctionnellement au moteur électrique (106, 206) et est montée de manière mobile en rotation, et - un poussoir de frein (114, 214, 314) mobile le long d'un axe de poussoir et destiné à actionner un levier (358) du frein (368), le poussoir de frein (114, 214, 314) disposant d'une tête de poussoir (112) à son extrémité tournée vers la came (108, 208, 308, 408) et la tête de poussoir (112) enfermant un élément de roulement (110) qui est supporté par des paliers (116), **caractérisé en ce que** la came (108, 208, 308, 408) et le poussoir de frein (114, 214, 314) comportent des surfaces de contact qui sont en appui l'une sur l'autre et qui glissent ou roulent l'une sur l'autre pour la transmission directe du couple d'entraînement entre la came (108, 208, 308, 408) et le poussoir de frein (114, 214, 314).

2. Actionneur de frein électromécanique r (102, 202, 302, 402) selon la revendication 1,
**caractérisé en ce que** la surface de contact de la came (108, 208, 308, 408) est conçue de telle sorte qu'une transmission de puissance non linéaire de la came (108, 208, 308, 408) au poussoir de frein (114, 214, 314) est effectuée en fonction de la position angulaire entre la came (108, 208, 308, 408) et l'axe du poussoir de frein (114, 214, 314).

3. Actionneur de frein électromécanique (102, 202, 302, 402) selon l'une des revendications précédentes, **caractérisé en ce que** le poussoir de frein (114, 214, 314) est mobile suivant un mouvement alternatif entre une position rétractée et une position déployée, et la came (108, 208, 308, 408) est mobile suivant un mouvement alternatif entre une position initiale et une position finale, la position initiale de la came (108, 208, 308, 408) correspondant à la position rétractée du poussoir de frein (114, 214, 314) et la position finale de la came (108, 208, 308, 408) correspondant à la position déployée du poussoir de frein (114, 214, 314).

4. Actionneur de frein électromécanique (102, 202, 302, 402) selon la revendication 3,
les surfaces de contact du poussoir de frein (114, 214, 314) et de la came (108, 208, 308, 408) venant en appui l'une sur l'autre en un point de contact et définissant au point de contact un angle de contact par rapport à l'axe du poussoir (114, 214, 314) et l'angle de contact devenant plus petit à mesure que la rotation de la came (108, 208, 308, 408) augmente à partir de la position initiale.

5. Actionneur de frein électromécanique (102, 202, 302, 402) selon l'une des revendications précédentes, **caractérisé par** une transmission (119, 219) qui est entraînée par le moteur électrique (106, 206) et qui est reliée fonctionnellement à la came (108, 208, 308, 408) .

6. Actionneur de frein électromécanique (102) selon l'une des revendications précédentes,
**caractérisé en ce que** la came (108) comporte sur sa circonférence une indentation (132) destinée à définir une position de frein de stationnement, l'indentation (132) étant disposée entre un point de contact avec le poussoir de frein (114) dans la position initiale et un point de contact avec le poussoir de frein (114) dans la position finale.

7. Actionneur de frein électromécanique (102) selon la revendication 6, **caractérisé en ce que** l'indentation (132) est disposée de telle sorte que le poussoir de frein (114), lorsqu'il est disposé dans l'indentation (132), transmet une puissance de freinage dans une plage d'environ 80 % à environ 100 % de la puissance de freinage totale.

8. Actionneur de frein électromécanique (202, 302) selon l'une des revendications précédentes,
**caractérisé par** un élément à ressort (236, 336, 436) qui est relié fonctionnellement au moteur électrique (206) de telle sorte que l'énergie est stockée dans une première plage de déflexion du poussoir de frein et l'énergie est délivrée au poussoir de frein dans une deuxième plage de déflexion du poussoir de frein.

9. Actionneur de frein électromécanique (202) selon la revendication 8, **caractérisé en ce que** l'élément à ressort (236) comporte une surface d'interaction qui est en appui sur une surface circonférentielle d'une came (242) entraînée par le moteur électrique, la surface d'interaction de l'élément à ressort (236) et la surface circonférentielle de la came (242) glissant ou roulant l'une sur l'autre, et la surface circonférentielle de la came (242) étant formée de telle manière que l'énergie soit stockée dans l'élément à ressort (236) dans une première plage d'angle de rotation de la came (242) et l'énergie de l'élément à ressort (236) soit délivrée dans une deuxième plage d'angle de rotation.

10. Actionneur de frein électromécanique (202) selon la revendication 9, **caractérisé en ce que** la came (242) comporte une troisième plage d'angle de rotation dans laquelle la distance de l'arbre de la came (242) à la circonférence de la came (242) est sensiblement constante.

11. Actionneur de frein électromécanique (202) selon la revendication 10 ou 11, **caractérisé en ce que** la force élastique de l'élément à ressort (236) dans la troisième plage d'angle de rotation de la came (242) empêche la rotation de la came (242) de sorte que, lorsque le couple d'entraînement du moteur électrique (206) est supprimé, le poussoir de frein (214) est maintenu dans la déviation correspondante.

12. Actionneur de frein électromécanique (402) selon l'une des revendications 8 à 11,
**caractérisé en ce que** l'élément à ressort (436) comporte une tête de ressort (472) qui est en appui sur une piste (478) montée sur la came (408) dans la direction axiale, laquelle piste est conçue de telle sorte que de l'énergie soit stockée dans l'élément à ressort (436) en fonction de la plage d'angle de rotation de la came (408) et l'énergie soit délivrée par l'élément à ressort (436) dans une deuxième plage d'angle de rotation.

13. Actionneur de frein électromécanique (302) selon l'une des revendications 8 à 13,
**caractérisé en ce que** l'élément à ressort (336) est en appui sur un levier (360) qui est disposé sur la came (308) et qui est conçu de telle sorte que de l'énergie soit stockée dans l'élément à ressort (336) en fonction de la plage d'angle de rotation de la came (308) et, dans une deuxième plage d'angle de rotation, de l'énergie soit délivrée par l'élément à ressort (336).

14. Actionneur de frein électromécanique (102, 202, 302, 402) selon l'une des revendications précédentes, **caractérisé en ce que** le poussoir de frein (114, 214, 314) peut être déplacé le long de l'axe du poussoir et guidé linéairement pour actionner le levier de frein (358).

15. Actionneur de frein électromécanique (102, 202, 302, 402) selon l'une des revendications 1 à 13, **caractérisé en ce que** le poussoir de frein (314) peut être déplacé de manière non linéaire pour actionner le levier de frein (358).

16. Frein à disque (368), en particulier frein à disque de véhicule utilitaire, comprenant :
- un disque de frein (354),
- au moins une garniture de frein (356) destinée à générer une action de freinage par pression contre le disque de frein (354),
- un levier de frein (358) monté de manière pivotante sur un axe de levier pour presser l'au moins une garniture de frein (356) sur le disque de frein (354), et
- un poussoir de frein (314) qui est mobile dans la direction d'un axe de poussoir et qui est accouplé au levier de frein (358) pour faire pivoter le levier de frein (358) sur l'axe du levier, et
- un actionneur de frein électromagnétique (102, 202, 302, 402) qui est accouplé au poussoir de frein (314) pour déplacer celui-ci dans la direction de l'axe du poussoir,
**caractérisé en ce que** l'actionneur de frein électromécanique (102, 202, 302, 402) est conçu selon l'une des revendications précédentes.
